# EUROPEAN PATENT APPLICATION

(11) **EP 4 826 837 A1**
(43) Date of publication of application: **21.10.2026**
(21) Application number: 26172039.5
(22) Date of filing: 13.04.2026
(51) Int. Cl.: H01M 10/48, H01M 10/613, H01M 10/615, H01M 10/617, H01M 10/625, H01M 10/6556, H01M 10/6568

(54) **SELECTIVE IMMERSION COOLING DEVICES, SYSTEMS, AND METHODS**

(30) Priority: 15.04.2025 US 202563788974 P; 10.04.2026 US 202619644340
(71) Applicant: Cummins Inc., Columbus, IN 47201 (US)
(72) Inventor: Patel, Arunkumar, London, HA8 6BU (GB); Miranda, Delton, Columbus, 47201 (US); Gamage, Anuradha Nanayakkara, Columbus, 47201 (US); Jeshani, Mahesh Ravilal, Milton Keynes, MK13 8PE (GB)
(74) Representative: Cleveland Scott York

(57) **Abstract**

A battery system with a thermal management architecture is disclosed that enables selective thermal regulation across multiple independent zones of a battery cell arrangement. The system includes a plurality of thermal regulation zones defined within the periphery of the battery cell structure. A thermal exchange media, such as a dielectric coolant, is selectively routed through these zones using independently controllable inlet and outlet ports connected to flow control manifolds. This enables targeted cooling based on real-time or predicted thermal demands in specific battery regions.

## Description

### CROSS-REFERENCE TO RELATED APPLICATIONS

The present application claims priority to U.S. Provisional Application Ser. No. 63/788,974, entitled "SELECTIVE IMMERSION COOLING DEVICES, SYSTEMS, AND METHODS," filed on April 15, 2025, the entire disclosures being expressly incorporated herein by reference.

### TECHNICAL FIELD

This disclosure relates to battery systems, and more particularly to thermal management systems for selectively regulating the temperature of battery cells using targeted immersion cooling techniques.

### BACKGROUND

Thermal regulation is a key aspect of battery system design, especially for high-energy-density applications such as electric vehicles (EVs), grid storage, and aerospace systems. Battery cells generate heat during both charging and discharging cycles, and excessive or uneven heat buildup can lead to thermal runaway, accelerated cell degradation, or performance loss. As a result, battery cooling systems have become increasingly important for ensuring system reliability, extending battery life, and maintaining consistent performance across a wide range of environmental and operational conditions.

Conventional thermal management approaches often rely on air or liquid cooling systems that uniformly cool the battery pack. More advanced systems use immersion cooling, where a dielectric fluid surrounds the cells to provide efficient heat rejection. While immersion cooling improves thermal performance compared to surface-based systems, existing solutions typically operate as a single thermal zone or apply uniform cooling across the entire battery structure. These systems lack the ability to dynamically regulate specific portions of the battery pack, such as individual tiers or regions that may experience higher thermal loads.

The absence of localized or zone-specific cooling can lead to inefficient use of cooling media and increased parasitic energy losses due to continuous pumping of fluid through the entire pack, regardless of actual thermal demand. Furthermore, without selective regulation, thermal imbalances may develop within the battery, potentially leading to non-uniform aging and reduced system performance over time.

### SUMMARY

The present disclosure provides a battery system with a thermal management architecture that enables selective thermal regulation across multiple independent zones of a battery cell arrangement. The system includes a plurality of thermal regulation zones defined within the periphery of the battery cell structure. A thermal exchange media, such as a dielectric coolant, is selectively routed through these zones using independently controllable inlet and outlet ports connected to flow control manifolds. This enables targeted cooling based on real-time or predicted thermal demands in specific battery regions.

In one embodiment, the battery comprises a stacked arrangement of cell tiers, where each tier corresponds to a thermal regulation zone. The thermal management system is capable of directing coolant to specific tiers or surface zones, such as those experiencing elevated temperatures, while bypassing others. This tier-specific or surface-zone-specific approach allows for more precise thermal control, improved cooling efficiency, and reduced pumping power losses.

A control system monitors thermal conditions across the zones and actuates flow control valves accordingly. The thermal management system may dynamically respond to different operational states-such as charging, fast charging, discharging, or standby-and adapt cooling patterns based on the thermal profiles associated with each state. This enables the system to optimize thermal performance and protect battery health under variable usage conditions.\

By enabling multi-level and multi-zone immersion cooling, the disclosed system provides a scalable solution for managing thermal loads in high-capacity battery packs. This approach supports improved thermal safety, extended battery lifespan, and reduced energy consumption associated with cooling operations, making it well-suited for advanced electric mobility and energy storage platforms.

### BRIEF DESCRIPTION OF THE FIGURES

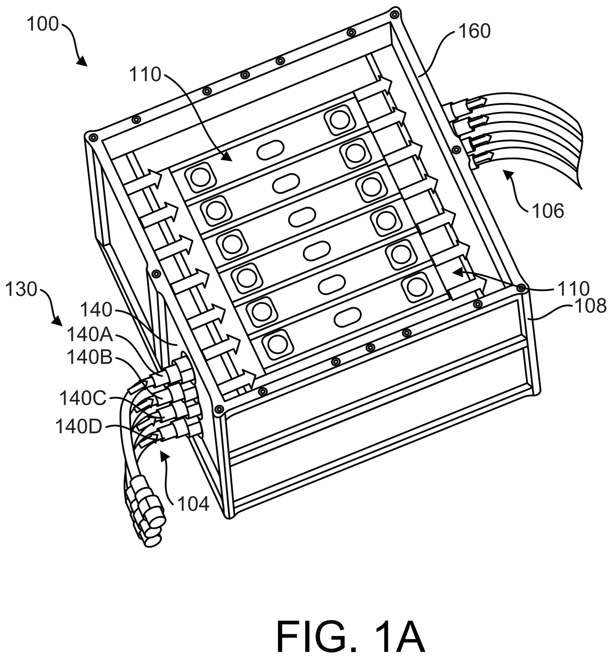

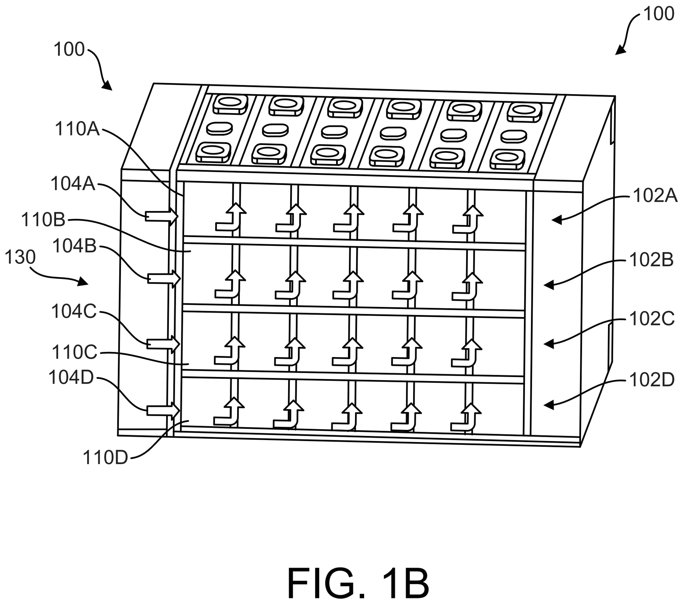

FIGs. 1A-B are diagrams of a battery module configured with a zoned immersion cooling system, showing a side-elevation view of stacked battery cell tiers, fluid inlet and outlet interfaces, and discrete thermal regulation zones aligned along the major dimension of the module. FIG. 1A is a top view of the battery module with a zoned immersion cooling system of the present disclosure. FIG. 1B is a side view of the battery module with a zoned immersion cooling system of the present disclosure.

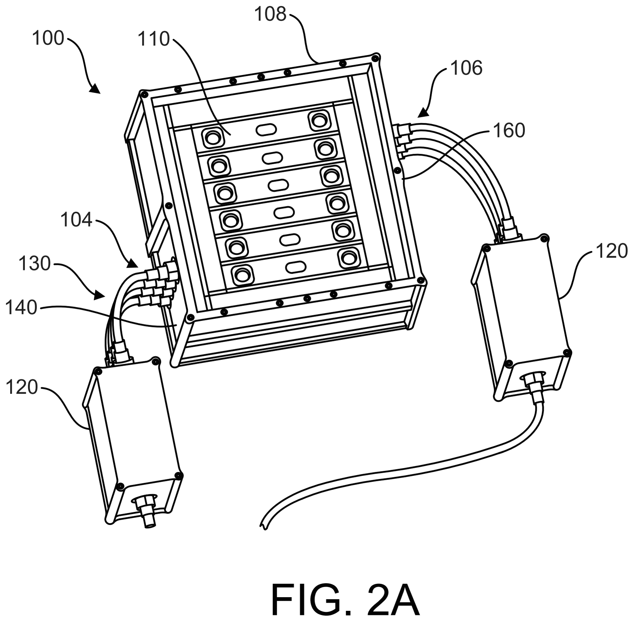

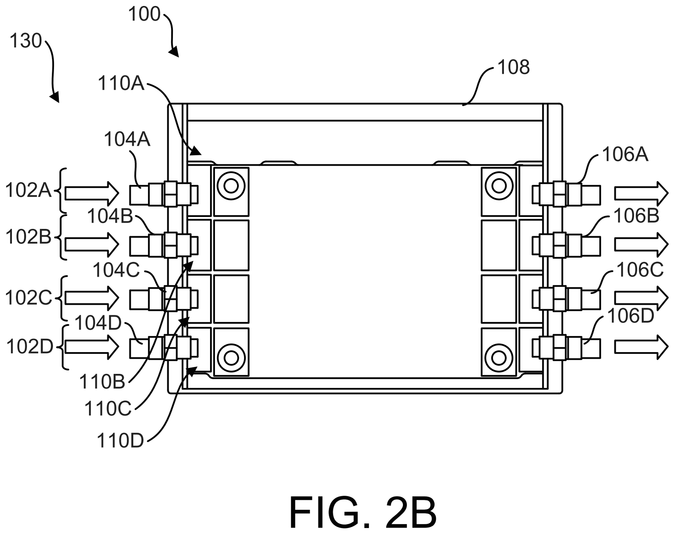

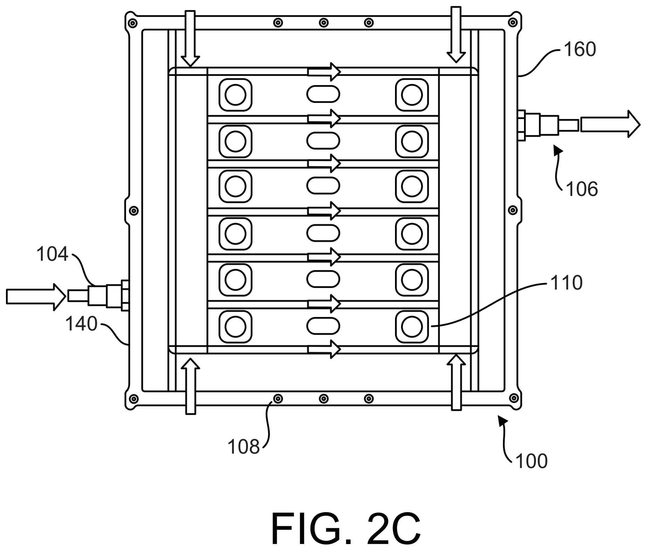

FIGs. 2A-C are diagrams of the battery module of FIGs. 1A-B. FIG. 2A is a top-down view of the inlet and outlet port arrangement along the minor dimension of the module and the integration of external manifold plumbing for selective coolant flow control in the battery module of FIGs. 1A-B. FIG. 2B is a second top-down view of the battery module of FIG. 2A. FIG. 2C is a side view of the battery module of FIG. 2A.

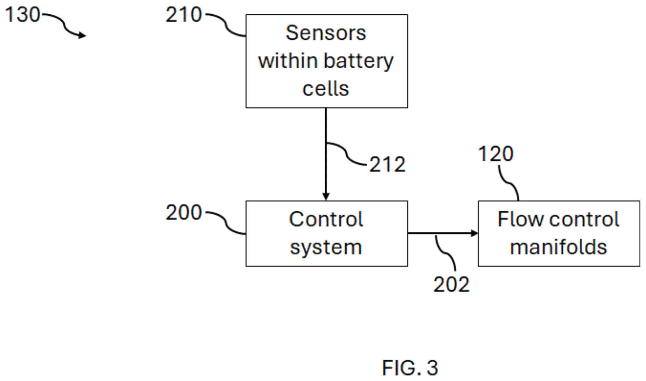

FIG. 3 is a flow chart of the thermal management system of the present disclosure.

### DETAILED DESCRIPTION

Thermal management is a key factor in the performance, longevity, and safety of battery systems, particularly in applications such as electric vehicles where battery operating conditions vary significantly. Efficient heat rejection during high-load operations-such as fast charging or high-power discharge-is essential to maintaining battery health, preventing degradation, and improving total cost of ownership (TCO). Conventional immersion cooling systems have been adopted to address some of these challenges. However, current systems typically provide full or partial immersion cooling without the ability to isolate or independently regulate cooling at different regions or depths of the battery cell stack.

The present system provides a targeted thermal regulation approach by dividing the battery cell arrangement into multiple thermal regulation zones. These zones can be independently managed via a multi-level and multi-zone flow control scheme. Coolant is delivered only to zones where thermal regulation is needed, enabling precise cooling of selected areas-such as specific cell surface regions or tiers-based on real-time thermal data or predicted demand. This selectivity improves pumping efficiency and reduces unnecessary coolant circulation, which can minimize parasitic power losses.

The system incorporates both multiple inlet and outlet ports connected to programmable flow control manifolds, allowing two-way modulation of coolant delivery and exhaust. This architecture enables thermal regulation of each zone in isolation or in grouped configurations, thereby supporting complex battery use cases under varying environmental and load conditions. In contrast to systems where flow is governed by outlet-only valve control or relies on passive flow exit paths, the described solution enables dynamic and granular thermal control at various heights or tiers of the battery, enhancing thermal agility and operational responsiveness.

Conventional battery cooling systems, including immersion-based approaches, lack the ability to selectively and independently regulate cooling at discrete regions within the battery pack. These systems typically do not cool the entire battery uniformly, resulting in inefficient use of thermal exchange media, higher energy consumption for pumping, and inadequate responsiveness to localized thermal excursions. Furthermore, they do not support tier-level control across the vertical height of a stacked battery architecture, which can lead to thermal imbalance, uneven aging, and performance degradation of individual cells.

The disclosed system addresses this technical problem by introducing a thermal management architecture that enables selective cooling of multiple independently controllable thermal regulation zones within the battery periphery. This is achieved through a combination of strategically placed inlet and outlet ports, zone-specific flow control valves, and a control system capable of dynamically routing thermal exchange media based on zone-specific temperature criteria. By allowing the thermal exchange media to be directed only to the zones requiring regulation, the system improves cooling precision, reduces pumping losses, and maintains a balanced thermal profile across all operational conditions. The solution supports thermal regulation on a per-tier or per-surface-zone basis, enhancing both safety and operational efficiency in high-performance battery systems.

The immersive cooling system for batteries incorporates several innovative features and benefits to ensure optimal performance and safety. At its core is a dielectric cooling fluid, formulated for high thermal conductivity and electrical insulation. This fluid resists thermal degradation and is compatible with lithium-ion and other advanced battery chemistries, making it ideal for modern energy storage systems. The immersion design ensures that the batteries are fully submerged in the cooling fluid, providing direct contact for uniform temperature regulation. This design supports modular configurations, enabling easy installation and maintenance.

To maintain consistent thermal performance, the system employs active fluid circulation, using integrated pumps and fluid channels to ensure the cooling fluid flows evenly across all battery cells. This setup minimizes hotspots and optimizes heat dissipation, especially during peak operational loads. The heat exchanger system transfers the heat absorbed by the fluid to the ambient environment or redirects it to a secondary cooling loop. The system can also integrate with vehicle HVAC systems or renewable energy cooling units, enhancing its versatility.

Safety features are a critical aspect of the system. The dielectric fluid eliminates the risk of electrical shorts or fires, while embedded sensors monitor fluid temperature, flow rate, and battery health. This real-time feedback ensures system stability and allows for proactive maintenance.

The system of the present disclosure comprises several key components including a battery module and a thermal management system.

The battery module includes a modular pack housing multiple battery cells designed for maximum exposure to cooling fluid from the thermal management system.

The thermal management system may cool the multiple battery cells within the battery module by selectively performing immersion cooling of the battery cells.

The cooling fluid may be pumped through the thermal management system via a circulation pump. The circulation pump ensures uniform fluid flow. Further, the thermal management system may comprise a heat exchanger, such as a plate or tube-fin type, configured to efficiently transfer heat to external cooling media. The thermal management system may be controlled using a control system, discussed further below in reference to FIG. 3. The control system may use sensors embedded within the battery cells of the battery module to monitor key parameters and a central controller to adjust pump speed and heat exchanger operation for optimal performance.

The cooling fluid, or dielectric fluid, is a blend of synthetic hydrocarbons or advanced esters with additives that enhance thermal conductivity while remaining free of impurities to prevent electrochemical reactions. Throughout the disclosure, the cooling fluid may be referred to as "coolant", "dielectric fluid", "thermal exchange fluid", "thermal exchange media", "dielectric thermal exchange fluid", and/or "fluid."

The operational workflow begins as batteries generate heat during charge or discharge. This heat is directly absorbed by the dielectric fluid through immersion. The pump circulates the heated fluid to the heat exchanger, where the thermal energy is dissipated into the environment or redirected to a secondary system. The cooled fluid then returns to the battery module, ensuring consistent temperature regulation and peak battery performance.

The system may include the immersion of a modular battery pack in dielectric fluid, a fluid circulation system for maintaining uniform flow, and a heat exchanger for efficient thermal energy removal. Additionally, the system describes include the fluid's non-conductive and thermally stable properties, the integration of the heat exchanger with vehicle HVAC systems, and the use of sensors to monitor performance in real time.

Figures 1A-B presents a view of a battery module 100 comprising the thermal management system 130 of the present disclosure. The thermal management system 130 is configured for zoned immersion cooling using a dielectric thermal exchange medium. The module is composed of multiple horizontal tiers of battery cells 110, each constituting a separate thermal regulation zone 102. The thermal regulation zones 102 may comprise a plurality of thermal regulation zones 102. For example, in one embodiment, the battery module 100 may comprise four thermal regulation zones 102A, 102B, 102C, and 102D. While the present disclosure may reference the thermal regulation zones generally as "thermal regulation zones 102", the system may comprise any number of thermal regulation zones and the corresponding inlets 104 and outlets 106, as described below.

These zones 102 are arranged along the module's major dimension, allowing for independent thermal control across stacked cell groups. The figure shows the placement of lateral fluid ports-designated inlets 104 and outlets 106-along the minor dimension of the module. The designated inlets 104 may comprise a plurality of inlets. Similarly, the designated outlets 106 may comprise a plurality of outlets 106. While the present disclosure may reference the plurality of inlets and outlets generally as "inlets 104" and "outlets 106", the system may comprise any number of inlets 104 and outlets 106. In one embodiment, the plurality of inlets comprises at least four inlets 104A, 104B, 104C, and 104D and the plurality of outlets 106 comprises at least four outlets 106A, 106B, 106C, and 106D. Each inlet of the plurality of inlets 104 may correspond with and be fluidly connected to a thermal regulation zone 102 such that the inlet 104 may supply coolant fluid to the corresponding thermal regulation zone 102. Further, each thermal regulation zone 102 may correspond with and be fluidly coupled to an outlet of the plurality of outlets 106 such that discharged coolant may flow out of the thermal regulation zone 102 from the corresponding outlet 106.

For example, in the embodiment mentioned above, a first thermal regulation zone 102A may receive coolant through a first inlet 104A. The coolant may be used to cool battery cells 110 within the first thermal regulation zone 102A. The coolant may then be discharged out of the first thermal regulation zone A out of a first outlet 106A. Similarly, a second inlet 104A, a second thermal regulation zone 102B, and a second outlet 106B may be fluidly connected in the same way. A third inlet 104C, a third thermal regulation zone 102C, and a third outlet 106C may be connected in the same way. And finally, a fourth inlet 104D, a fourth thermal regulation zone 102D, and a fourth outlet 106C may be connected in the same way.

Ports 104, 106 are connectable to external flow control manifolds 120 (shown in FIGs. 2A-C), enabling directed delivery and extraction of the coolant fluid. The thermal management system 130 may use a control system 200 (shown in FIG. 3) to send signals to the flow control manifolds 120. The signals may cause flow control valves of each of the inlets 104 to open or close such that coolant flows into desired inlets 104 based on the signal from the control system 200. Each regulation zone 102 includes dedicated conduits that route fluid across the immersed battery cells 110 to facilitate efficient convective heat transfer. The modular design supports flexibility in configuration and maintenance, and the immersive environment ensures uniform surface contact between the cells 110 and the dielectric fluid within the thermal management system 130.

Figures 2A-C build upon the structural depiction of FIGs. 1A-B by providing a top-down view of the battery module 100 including inlet 104 and outlet 106 interfaces. The multiple inlet 104 and outlet ports 106 may be positioned along the lateral edges of the battery module 100. These ports 104, 106 are connected to external manifolds 120 that include embedded control logic and actuators. The manifolds 120 receive a dielectric coolant-such as a synthetic hydrocarbon or ester-based fluid-from a pump system and route it selectively through desired thermal regulation zones 102. The thermal management system 130 allows real-time targeting of zones 102 that exceed predefined temperature thresholds.

The thermal management system 130 may allow for a greater volume of coolant to flow to particular zones more than others. For example, if the temperature of a battery cell 110 or layer of battery cells 110 within zone A 102A is above a predetermined temperature threshold, but other zones (such as zones B-D) are below the threshold, the thermal management system may cause a greater volume of coolant to flow through inlet 104A to cool zone 102A than the volume of coolant flowing to zones B-D. The volume of coolant flowing through the inlets may be controlled by opening and closing flow valves within coolant fluid lines. The valves may be opened or closed partially or fully.

Battery cell 110 temperatures may fluctuate for a variety of reasons. The temperature of a stack of battery cells may increase due to charging condition (fast charge, standard charge/discharge, regenerative braking energy capture, etc.), and/or a thermal event (such as a failure in one or more battery cells). Battery module 100 may include a plurality of sensors 210 within the battery module 100. Sensors 210 may be within battery cells 110 and/or the stacks of battery cells 110. The sensors 210 may be configured to perform real time monitoring of individual cell temperature and gradient of temperature of a stack or tier of battery cells. The temperature data collected by the sensors 210 may be sent to a control system 200 of the thermal management system 130, shown in FIG. 3.

The thermal management system 130 also directs heated fluid exiting each zone 102 toward a heat exchanger, enabling dissipation of thermal energy and recirculation of the cooled medium back into the system. The configuration in FIGs. 2A-C illustrates the system's adaptability and efficiency by minimizing unnecessary fluid circulation, thereby improving energy usage and cooling responsiveness.

Collectively, FIGS. 1A-2C provide a comprehensive visual understanding of the structural and operational elements of a selective immersion cooling system. The zoned architecture, dielectric fluid immersion, and flow-selective manifolds work together to deliver an intelligent thermal management solution tailored for high-performance energy storage systems such as those found in electric vehicles or grid-scale storage units. The system's flexibility, safety profile, and ability to integrate with external thermal loops (e.g., vehicle HVAC systems) make it suitable for a broad range of thermal management applications.

The system shown in FIGS. 1A-2C relates to a modular immersion cooling configuration for battery assemblies, suitable for use in electrified vehicle applications and other high-power energy storage contexts. The system comprises a dielectric fluid-based thermal management solution configured to enable zoned cooling of battery cells, allowing for dynamic and selective temperature regulation during various operational states of the battery.

In this configuration, a battery module 100 includes multiple battery cells 110 arranged within a structural housing 108 that defines a peripheral boundary. Within this boundary, a set of discrete thermal regulation zones 102 are formed, each aligned to a tier or group of cells 110. These zones 102 are oriented along the module's 100 major dimension, with individual inlet 104 and outlet 106 interfaces arranged along the minor dimension. The inlets and outlets 104, 106 support distribution and removal of a dielectric thermal exchange medium-such as a synthetic hydrocarbon or ester-based fluid-via multiple ports 104A-D and 106A-D connected to external flow control manifolds 120.

The coolant fully immerses the battery cells 110 with in the battery module 100 arrangement, enabling direct convective heat transfer from cell surfaces 110 into a fluid volume of the coolant. This immersive contact reduces thermal resistance and supports uniform cooling across cells 110. The fluid's non-conductive and thermally stable properties make it suitable for use with lithium-ion chemistries, enhancing both operational safety and longevity of the battery pack.

Selective regulation is achieved by controlling fluid flow into targeted thermal zones 102. Sensors 210 embedded in the battery module 100 may detect thermal deviations from predefined thresholds or criteria, and control logic within the flow control manifolds 120 activates fluid routing to specific zones 102 as needed. For example, during charging or high-load discharging, heat generated in a particular zone 102 may exceed acceptable limits; in response, the thermal management system 130 may direct increased fluid volume to that zone 102 while reducing flow elsewhere. This enables efficient cooling without the need to uniformly circulate fluid across all zones 102, which may not be thermally active at a given time.

The hardware shown across the figures illustrates the battery module 100 and associated thermal management interfaces. The battery housing may be partitioned into several stacked sections, each representing a thermal regulation zone 102 aligned with a corresponding horizontal tier of battery cells 110. Each section includes inlet connections 104 on one lateral side and outlet connections 106 on the opposite side. A series of fluid conduits or headers run across these sections, routing fluid into the immersed zones 102 of cells 110. The inlets 104 and outlets 106 are plumbed externally to a distribution manifold.

Figures 1A-C show the arrangement of inlet 104 and outlet 106 plumbing relative to the battery module's 100 structure. From a top view (FIG. 2C), the layout reveals multiple fluid entry and exit points positioned along the minor edges of the battery module 100. An external control enclosure, identified as a manifold system 120, receives a fluid supply and distributes the fluid supply selectively to the inlet ports 104 based on real-time control commands. The outlets 106 converge into discharge lines that carry the warmed fluid toward a downstream heat exchanger or further cooling stage.

During operation, coolant is introduced into the inlet 104 manifold, where it is routed selectively into one or more designated regulation zones 102 of the battery module 100. The fluid enters through lateral ports located along the module's 100 sidewalls and is channeled across the surface area of the immersed cells 110. As the fluid flows through each zone 102, it absorbs heat directly from the cells 110 through conductive and convective heat transfer mechanisms. This cross-zone flow pattern allows for full surface contact between the battery cells 110 and the coolant.

Upon reaching the far side of each zone, the now-heated coolant exits through corresponding outlet ports and is carried via tubing to a thermal exchange unit positioned outside the battery housing. Within this exchanger, the coolant releases the absorbed thermal energy to an ambient sink or a secondary loop, such as a vehicle's HVAC system or a thermal reservoir. The now-cooled coolant is then recirculated back into the manifold 120 for re-entry into the required zones 102. The thermal management system 130 is configured to allow for zone-specific actuation of flow, enabling real-time adaptation to non-uniform temperature distributions within the battery module 100.

This flow-through design ensures each section of the battery 100 can be independently regulated based on demand, reducing thermal gradients and improving system efficiency. By enabling targeted cooling, the system enhances operational stability and allows the battery to operate closer to optimal thermal thresholds, promoting both performance and service life.

This disclosure relates to an advanced thermal management system for battery assemblies, particularly applicable to battery modules used in electrified vehicles and other energy-intensive systems. The system is built around the concept of zoned immersion cooling using a coolant, with selective flow control to manage heat rejection only where it is needed. The described architecture supports versatile implementation strategies, enabling targeted fluid delivery to different structural parts of the battery and responsive control based on real-time operational conditions.

The described system can be configured in multiple ways to adapt to different battery pack designs and thermal management goals. At the core is the principle of defining and isolating distinct thermal regulation zones within the battery module. These zones may be configured in a variety of orientations-between vertically stacked tiers of cells, across horizontally grouped cells, or even along the perimeter walls or structural ribs of the module. This allows for fluid to be selectively directed not only to cell-facing surfaces but also to the interior walls, external housing surfaces, or other thermally relevant features of the battery architecture.

In one implementation, thermal regulation zones are defined between tiers of prismatic or pouch-type cells, where dielectric fluid can flow laterally across the full surface area of each tier. In another, fluid is routed through embedded channels adjacent to the outer casing, helping to manage heat at the structural boundary, where thermal transfer to the environment may be more effective. The system may also include features that direct fluid along inner vertical walls or flow plates, offering additional surface area for thermal exchange without altering the battery cell arrangement itself.

Each of these zones can be independently actuated or operated in coordination with others, offering the ability to target localized hot spots or respond to macro-scale thermal trends across the pack. For example, a single zone may be activated in isolation to cool a sub-section experiencing elevated temperature due to local current flow, or multiple zones may be simultaneously engaged when the system undergoes fast charging or high-power discharge events.

The system of the present disclosure has the ability to integrate with intelligent control logic and advanced computing structures. The system supports dynamic cooling control via programmable logic controllers (PLCs), embedded microcontrollers, or vehicle onboard computing platforms. These computing systems monitor various battery performance parameters-such as voltage, current, temperature gradients, and state-of-charge-via distributed sensor arrays located throughout the battery module.

Based on this telemetry, control logic can dynamically assess the thermal needs of individual zones and determine when, where, and how much fluid to route through them. For example, during aggressive acceleration, the controller may prioritize cooling of the discharge path and adjacent cell groups. During ambient heat soak conditions, it may activate zones along the module's exterior to prevent thermal accumulation. This "smart cooling" functionality enables predictive and responsive thermal behavior, contributing to improved battery life, performance, and energy efficiency.

Control algorithms may include threshold-based triggers, machine learning models trained on usage patterns, or rule-based decision trees that correlate specific operational conditions-such as state-of-health degradation or localized impedance increases-with the need for targeted cooling.

The selective immersion cooling system provides a high degree of operational flexibility by allowing each cooling zone to be controlled independently or in concert with others. In standalone mode, each zone operates as a self-contained circuit, with its own inlet and outlet path, flow rate control, and monitoring feedback loop. This isolation is useful for diagnostic purposes, allowing faults or inefficiencies to be localized.

Alternatively, the zones can be operated in grouped or coordinated modes. This is advantageous when systemic thermal events require broader intervention-for instance, when rapid charging induces uniform heating across multiple tiers. In such cases, the controller can open flow paths to several zones simultaneously and increase overall coolant throughput to stabilize the system.

The ability to scale cooling effort dynamically, from zone-level to pack-wide, contributes to energy-efficient operation. Pumping effort is minimized because the fluid is not circulated unnecessarily through zones that are within target temperature thresholds.

This system offers a versatile platform for thermal management by enabling zonal immersion cooling that targets specific areas such as cell tiers, structural boundaries, or internal walls. It supports real-time, logic-driven control of coolant flow through the use of embedded computing systems that monitor and respond to dynamic thermal conditions. The system allows for either independent or coordinated operation of thermal regulation zones, depending on localized or system-wide cooling needs. Additionally, it is highly adaptable to a range of operational events, including fast charging, ambient heat soak, and varying load conditions, ensuring efficient and responsive thermal regulation across diverse use cases.

Such configurability makes the system suitable for integration across a range of battery module architectures, supporting both performance optimization and system longevity in high-demand applications such as electrified transportation and stationary energy storage.

Referring back to FIGs. 1A-2C, a battery module 100 includes a battery cell arrangement 110 configured to store electrical energy for supplying power to one or more components during operation. The battery cell arrangement 110 is contained within an enclosure having a defined periphery, or structural housing, 108. The periphery 108 outlines the geometric boundary of the battery module 100 and may comprise various planar or contoured surfaces depending on the enclosure design.

A thermal management system 130 is in thermal communication with the battery cell arrangement 110. The thermal management system 130 is configured to provide selective thermal regulation across a plurality of thermal regulation zones 102A-D that are defined spatially within the periphery 108. Each thermal regulation zone 102A-D is associated with a respective segment of the battery cell arrangement 110 and may be thermally regulated individually or in coordination with other zones to address localized temperature conditions.

The battery module 100 may have a major dimension along a first axis and a minor dimension along a second axis. The first axis may be perpendicular to the second axis. In the example illustrated in FIGs. 1A-B, the thermal regulation zones 102 are aligned generally along a major dimension of the battery, while the minor dimension supports the organization of fluid communication interfaces. An inlet interface 140 and an outlet interface 160 are positioned along the periphery 108. The inlet interface 140 includes one or more inlet ports 104 through which a thermal exchange media, such as a dielectric coolant, can be introduced. The outlet interface 160 includes one or more outlet ports 106 for expelling the thermal exchange media after it has circulated through one or more thermal regulation zones 102.

Each of the inlet ports 104 and outlet ports 106 is operatively connected to respective flow control manifolds 120. These manifolds 120 regulate the distribution and flow rate of the thermal exchange media through selected thermal regulation zones 102. The arrangement of inlet 104 and outlet ports 106 along the minor dimension enables distributed ingress and egress of coolant across vertical layers or lateral segments of the battery module 100. In certain configurations, the battery cell arrangement 110 may be structured as a stack of battery cells 110 in tiers. Each tier is associated with a respective thermal regulation zone 102.

The thermal management system 130 is configured to direct the thermal exchange media through a subset of the thermal regulation zones 102, thereby enabling localized thermal regulation based on real-time monitoring. Such operation may occur during active power delivery, charging, or standby conditions. During standby, for instance, the system may detect residual thermal elevations and route coolant to selected zones, even when the battery is not supplying power externally. The selection of zones to regulate is determined based on one or more criteria, such as deviation from a target temperature range or exceeding a threshold indicative of abnormal thermal behavior.

In certain modes of operation, the selected subset of thermal regulation zones 102 may be modified dynamically to form a second subset of thermal regulation zones 102, based on updated thermal readings or predicted thermal activity. The first subset may be wholly distinct from the second subset, partially overlapping, or completely contained within the second subset. The thermal management system 130 may reference a profile of operational modes and their corresponding historical thermal patterns to predict and prioritize regulation zones. This allows thermal exchange media to be routed proactively to mitigate thermal buildup.

Figure 3 depicts the control scheme of the thermal management system 130. The thermal management system 130 of the present disclosure comprises a control system 200 comprising one or more processors and associated control circuitry configured to manage the immersion cooling process. The control system 200 receives temperature data 212 from distributed thermal sensors 210 embedded within the battery cell arrangement 110. Based on this data, the control system 200 sends a cooling signal 202 to the flow control manifolds 120 to direct thermal exchange media through the first subset of thermal regulation zones 102 during a battery 100 operation, such as charge, discharge, or standby. When a particular zone 102 achieves a temperature matching a predefined regulation criterion, the control system 200 actuates flow control through the corresponding manifold 120 to initiate cooling within that zone.

The control system 200 can be further configured to extend cooling to the second subset of thermal regulation zones 102 depending on updated operational conditions. By modulating flow paths and targeting specific zones, the system 200 provides selective immersion cooling that enhances thermal stability and allows for improved control over localized temperature variations across the battery cell arrangement 110. The control system 200 may also execute predictive algorithms based on operational history and sensor data 212 to manage cooling profiles in advance of anticipated temperature excursions.

The battery module 100 including the thermal management system 130 of the present disclosure may be integrated into an electric or hybrid vehicle and operate when the vehicle is in operation and when the vehicle is not in operation. When the vehicle is in operation, the control system 200 may actively monitor temperature data 212 from the sensors 210 constantly to ensure the battery module remains sufficiently cooled. When the vehicle is not in operation, the control system 200 may intermittently monitor temperature data 212 from the sensors 210.

The examples discussed in the subsequent sections should therefore be viewed as illustrative implementations, rather than limiting definitions of the disclosed technology. Any modifications, enhancements, or refinements made to suit specific applications would be understood by those skilled in the art to be logical extensions of the principles presented herein.

The principles of the present disclosure can be applied across various vehicle configurations, optimizing power distribution, efficiency, and adaptability in multi-mode hybrid vehicle systems. The following Examples illustrate practical implementations of these principles in different drivetrain architectures:

In Example 1, a battery, comprising a battery cell arrangement including one of more battery cells, the battery cell arrangement is configured to store energy to supply power to one or more components connected to the battery during a battery operation, the battery cell arrangement having a periphery; and a thermal management system in thermal communication with the battery cell arrangement, the thermal management system is configured to facilitate selective thermal regulation of a plurality of thermal regulation zones defined within the periphery so as to target specific thermal regulation zones during the battery operation.

In Example 2, the battery as Example 1 describes, wherein the battery operation is a standby operation where the battery is not supplying power to the one or more connected components.

In Example 3, the battery as either of Examples 1 or 2 describe, further comprising an inlet interface and an outlet interface, each of which is formed at the periphery, the inlet interface including one or more inlet ports at which to receive a thermal exchange media for the selective thermal regulation, the outlet interface including one or more outlet ports at which to exhaust the thermal exchange media, both the one or more inlet and outlet ports are connectible to respective flow control manifolds that control a flow of the thermal exchange media through the plurality of thermal regulation zones.

In Example 4, the battery as any of Examples 1-3 describe, wherein the periphery includes a major dimension and a minor dimension, and wherein the thermal regulation zones are arranged along the major dimension.

In Example 5, the battery as any of Examples 1-4 describe, wherein at least one of: the one of more inlet ports includes a plurality of inlet ports arranged along the minor dimension; and the one or more outlet ports includes a plurality of outlet ports arranged along the minor dimension.

In Example 6, the battery as any of Examples 1-5 describe, wherein the thermal management system targets a subset of thermal regulation zones in the plurality of thermal regulation zones during the battery operation.

In Example 7, the battery as any of Examples 1-6 describe, wherein the thermal management system is configured to target thermal regulation zones that deviate from a criterion that is indicative of a given thermal regulation zone operating outside of an acceptable temperature range or threshold.

In Example 8, the battery as any of Examples 1-7 describe, wherein the battery operation is one of a plurality of battery operations, and the thermal management system is configured to operate based on a correlation of target thermal regulation zones that require thermal regulation with each battery operation in the plurality of battery operations.

In Example 9, the battery as any of Examples 1-8 describe, wherein the selective thermal regulation is a cooling of at least one of the thermal regulation zones using a coolant as a thermal exchange media so as to thermally regulate the battery cell arrangement.

In Example 10, the battery as any of Examples 1-9 describe, wherein the battery cell arrangement is a stack of battery cell tiers, and wherein the plurality of thermal regulation zones includes a corresponding thermal regulation zone for regulating each of the battery cell tiers in the stack of battery cell tiers.

In Example 11, a method of selectively performing immersion cooling of a battery, the method comprising: directing a thermal exchange media through a first subset of a plurality of thermal regulation zones defined within a periphery of a battery cell arrangement during a battery operation so as to selectively cool the first subset of the plurality of thermal regulation zones during the battery operation.

In Example 12, the method as Example 11 describes, further comprising directing the thermal exchange media through a second subset of the plurality of thermal regulation zones defined within the periphery of the battery cell arrangement.

In Example 13, the method as either of Examples 11 or 12 describe, wherein the first subset of the plurality of thermal regulation zones is different from the second subset of the plurality of thermal regulation zones.

In Example 14, the method as any of Examples 11-13 describe, wherein the first subset of the plurality of thermal regulation zones is included in the second subset of the plurality of thermal regulation zones.

In Example 15, the method as any of Examples 11-14 describe, wherein directing the thermal exchange media through the first subset of the plurality of thermal regulation zones defined within the periphery of the battery cell arrangement occurs during a battery operation in which a thermal regulation zone to be regulated achieves a temperature matching a criterion that indicates the thermal regulation zone needs thermal regulation.

In Example 16, a system comprising one or more processors configured to selectively perform immersion cooling of a battery, including directing a thermal exchange media through a first subset of a plurality of thermal regulation zones defined within a periphery of a battery cell arrangement during a battery operation so as to selectively cool the the first subset of the plurality of thermal regulation zones during a battery operation.

In Example 17, the system as Example 16 describes, wherein the immersion cooling of the battery further includes directing the thermal exchange media through a second subset of the plurality of thermal regulation zones defined within the periphery of the battery cell arrangement.

In Example 18, the system as either of Examples 16 or 17 describe, wherein the first subset of the plurality of thermal regulation zones is different from the second subset of the plurality of thermal regulation zones.

In Example 19, the system as any of Examples 16-18 describe, wherein the first subset of the plurality of thermal regulation zones is included in the second subset of the plurality of thermal regulation zones.

In Example 20, the system as any of Examples 16-19 describe, wherein directing the thermal exchange media through the first subset of the plurality of thermal regulation zones defined within the periphery of the battery cell arrangement occurs during a battery operation in which the thermal regulation zone achieves a temperature matching a criterion that indicates the thermal regulation zone needs thermal regulation.

The connecting lines shown in the various figures contained herein are intended to represent exemplary functional relationships and/or physical couplings between the various elements. It should be noted that many alternative or additional functional relationships or physical connections can be present in a practical system. However, the benefits, advantages, solutions to problems, and any elements that can cause any benefit, advantage, or solution to occur or become more pronounced are not to be construed as critical, required, or essential features or elements. The scope is accordingly to be limited by nothing other than the appended claims, in which reference to an element in the singular is not intended to mean "one and only one" unless explicitly so stated, but rather "one or more." Moreover, where a phrase similar to "at least one of A, B, or C" is used in the claims, it is intended that the phrase be interpreted to mean that A alone can be present in an embodiment, B alone can be present in an embodiment, C alone can be present in an embodiment, or that any combination of the elements A, B or C can be present in a single embodiment; for example, A and B, A and C, B and C, or A and B and C.

In the detailed description herein, references to "one embodiment," "an embodiment," "an example embodiment," etc., indicate that the embodiment described can include a particular feature, structure, or characteristic, but every embodiment can not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art with the benefit of the present disclosure to affect such feature, structure, or characteristic in connection with other embodiments whether or not explicitly described. After reading the description, it will be apparent to one skilled in the relevant art(s) how to implement the disclosure in alternative embodiments.

Furthermore, no element, component, or method step in the present disclosure is intended to be dedicated to the public regardless of whether the element, component, or method step is explicitly recited in the claims. No claim element herein is to be construed under the provisions of 35 U.S.C. 112(f), unless the element is expressly recited using the phrase "means for." As used herein, the terms "comprises," "comprising," or any other variation thereof, are intended to cover a non-exclusive inclusion, such that a process, method, article, or apparatus that comprises a list of elements does not include only those elements but can include other elements not expressly listed or inherent to such process, method, article, or apparatus.

While various embodiments of the disclosure have been shown and described, it is understood that these embodiments are not limited thereto. The embodiments may be changed, modified and further applied by those skilled in the art. Therefore, these embodiments are not limited to the detail shown and described previously but also include all such changes and modifications.

Unless otherwise indicated, all numbers expressing feature sizes, amounts, and physical properties used in the specification and claims are to be understood as being modified in all instances by the term "about." Accordingly, unless indicated to the contrary, the numerical parameters set forth in the foregoing specification and attached claims are approximations that can vary depending upon the desired properties sought to be obtained by those skilled in the art utilizing the teachings disclosed herein. The use of numerical ranges by endpoints includes all numbers within that range (e.g., 1 to 5 includes 1, 1.5, 2, 2.75, 3, 3.80, 4, and 5) and any range within that range.

As used in this specification and the appended claims, the singular forms "a," "an," and "the" encompass embodiments having plural referents, unless the content clearly dictates otherwise. As used in this specification and the appended claims, the term "or" is generally employed in its sense including "and/or" unless the content clearly dictates otherwise.

As used herein, when an element, component, device or layer is described as being "on" "connected to," "coupled to" or "in contact with" another element, component, device or layer, it can be directly on, directly connected to, directly coupled with, in direct contact with, or intervening elements, components, devices or layers may be on, connected, coupled or in contact with the particular element, component or layer, for example. When an element, component, device or layer for example is referred to as being "directly on," "directly connected to," "directly coupled to," or "directly in contact with" another element, component, device or layer, there are no intervening elements, components, devices or layers for example.

Although illustrative methods may be represented by one or more drawings (e.g., flow diagrams, communication flows, etc.), the drawings should not be interpreted as implying any requirement of, or particular order among or between, various steps disclosed herein. However, certain embodiments may require certain steps and/or certain orders between certain steps, as may be explicitly described herein and/or as may be understood from the nature of the steps themselves (e.g., the performance of some steps may depend on the outcome of a previous step). Additionally, a "set," "subset," "series" or "group" of items (e.g., inputs, algorithms, data values, etc.) may include one or more items, and, similarly, a subset or subgroup of items may include one or more items. A "plurality" means more than one.

As used herein, the term "based on" is not meant to be restrictive, but rather indicates that a determination, identification, prediction, calculation, and/or the like, is performed by using, at least, the term following "based on" as an input. For example, predicting an outcome based on a particular piece of information may additionally, or alternatively, base the same determination on another piece of information.

## Claims

1. A battery, comprising:
a battery cell arrangement including one or more battery cells (110), wherein the battery cell arrangement is configured to store energy to supply power to one or more components connected to the battery during a battery operation, the battery cell arrangement having a periphery; and
a thermal management system (130) in thermal communication with the battery cell arrangement, wherein the thermal management system is configured to facilitate selective thermal regulation of a plurality of thermal regulation zones defined within the periphery so as to target specific thermal regulation zones during the battery operation.

2. The battery of claim 1, wherein the battery operation is a standby operation where the battery is not supplying power to the one or more connected components.

3. The battery of claim 1 or 2, further comprising an inlet interface and an outlet interface, each of which is formed at the periphery, the inlet interface including one or more inlet ports at which to receive a thermal exchange media for the selective thermal regulation, the outlet interface including one or more outlet ports at which to exhaust the thermal exchange media, both the one or more inlet and outlet ports are connectible to respective flow control manifolds that control a flow of the thermal exchange media through the plurality of thermal regulation zones.

4. The battery of claim 3, wherein the periphery includes a major dimension and a minor dimension, and wherein the thermal regulation zones are arranged along the major dimension.

5. The battery of claim 4, wherein at least one of: the one of more inlet ports includes a plurality of inlet ports arranged along the minor dimension; and the one or more outlet ports includes a plurality of outlet ports arranged along the minor dimension.

6. The battery of any of the preceding claims, wherein the thermal management system targets a subset of thermal regulation zones in the plurality of thermal regulation zones during the battery operation.

7. The battery of any of the preceding claims, wherein the thermal management system is configured to target thermal regulation zones that deviate from a criterion that is indicative of a given thermal regulation zone operating outside of an acceptable temperature range or threshold.

8. The battery of any of the preceding claims, wherein the battery operation is one of a plurality of battery operations, and the thermal management system is configured to operate based on a correlation of target thermal regulation zones that require thermal regulation with each battery operation in the plurality of battery operations.

9. The battery of any of the preceding claims, wherein the selective thermal regulation is a cooling of at least one of the thermal regulation zones using a coolant as a thermal exchange media so as to thermally regulate the battery cell arrangement.

10. The battery of any of the preceding claims, wherein the battery cell arrangement is a stack of battery cell tiers, and wherein the plurality of thermal regulation zones includes a corresponding thermal regulation zone for regulating each of the battery cell tiers in the stack of battery cell tiers.

11. A system comprising one or more processors configured to selectively perform immersion cooling of a battery, including directing a thermal exchange media through a first subset of a plurality of thermal regulation zones defined within a periphery of a battery cell arrangement during a battery operation so as to selectively cool the first subset of the plurality of thermal regulation zones during a battery operation.

12. The system of claim 11, wherein:
the immersion cooling of the battery further includes directing the thermal exchange media through a second subset of the plurality of thermal regulation zones defined within the periphery of the battery cell arrangement; and/or
the first subset of the plurality of thermal regulation zones is different from the second subset of the plurality of thermal regulation zones; and/or
the first subset of the plurality of thermal regulation zones is included in the second subset of the plurality of thermal regulation zones; and/or
directing the thermal exchange media through the first subset of the plurality of thermal regulation zones defined within the periphery of the battery cell arrangement occurs during a battery operation in which the thermal regulation zone achieves a temperature matching a criterion that indicates the thermal regulation zone needs thermal regulation; and/or
the battery is the battery of any of claims 1 to 10.

13. A method of selectively performing immersion cooling of a battery, the method comprising:
directing a thermal exchange media through a first subset of a plurality of thermal regulation zones defined within a periphery of a battery cell arrangement during a battery operation so as to selectively cool the first subset of the plurality of thermal regulation zones during the battery operation.

14. The method of claim 13, further comprising directing the thermal exchange media through a second subset of the plurality of thermal regulation zones defined within the periphery of the battery cell arrangement.

15. The method of claim 13 or 14, wherein:
the first subset of the plurality of thermal regulation zones is different from the second subset of the plurality of thermal regulation zones; and/or
the first subset of the plurality of thermal regulation zones is included in the second subset of the plurality of thermal regulation zones; and/or
directing the thermal exchange media through the first subset of the plurality of thermal regulation zones defined within the periphery of the battery cell arrangement occurs during a battery operation in which a thermal regulation zone to be regulated achieves a temperature matching a criterion that indicates the thermal regulation zone needs thermal regulation.
